# EUROPEAN PATENT APPLICATION

(11) **EP 1 972 857 A2**
(43) Date of publication of application: **24.09.2008**
(21) Application number: 07121926.5
(22) Date of filing: 29.11.2007
(51) Int. Cl.: F24D 3/10

(54) **Coplanar modular manifold**

(30) Priority: 14.03.2007 IT MI20070507
(71) Applicant: Systerm S.p.A., 20124 Milano (IT)
(72) Inventor: Guarneri, Edoardo Piero, 20149 Milano (IT)
(74) Representative: Perani, Aurelio

(57) **Abstract**

The present invention relates to a coplanar manifold (1) for a hydraulic circuit, comprising a first manifold element (2) with a first primary inlet (6) and a first primary outlet (8), which define a first primary duct (4), a second manifold element (3) comprising a second primary inlet (7) and a second primary outlet (9), which define a second primary duct (5), fastening means for joining the first and second manifold elements (2, 3) together, wherein the fastening means provide fluid connection between the first secondary duct (20) and the second primary duct (5) only and between the second secondary duct (21) and the first primary duct (4) only. The present invention further relates to a manifold element (2) comprising a primary duct (4) and at least two secondary ducts (20, 21), wherein an inner outlet (14, 18) and an outer outlet (12, 16) are provided for each secondary duct (20, 21) and wherein threads are only provided on the outer outlets (12, 16).

## Description

The present invention relates to a coplanar manifold as defined in the preamble of claim 1 and a manifold element as defined in the preamble of claim 10.

Manifolds are hydraulic circuit components that, when embedded in a suitable recess formed in the wall, allow separation and branching-off of water flows in the circuit. They find particular use in plumbing circuits, which have very complex constructions, due to the requirement of distributing cold and hot water in narrow spaces to a large number of points of use.

In prior art, manifolds have been increasingly improved, thereby becoming of relatively compact size while still allowing distribution of both hot and cold water to a large number of points of use.

For the manifolds to be more and more compact, coplanar manifolds have been developed in the art, which can receive the pipes of the hydraulic circuit in side by side relationship with each other and parallel to the wall in which the manifold is designed to be placed, so that they have a small transverse size. Nevertheless, prior art coplanar manifolds are complex to manufacture, as they require assembling a large number of different elements.

In view of the prior art as described above, the object of the present invention is to provide a coplanar manifold, other than those provided heretofore, that requires assembling a smaller number of elements than those required to make prior art manifolds, and to provide a manifold element allowing to do so.

According to the present invention, this object is fulfilled by a manifold as defined in claim 1 or by a manifold element as defined in claim 10.

The features and advantages of the present invention will appear from the following detailed description of a practical embodiment, which is illustrated without limitation in the annexed drawings, in which:
- Figure 1 is an exploded view of a coplanar manifold according to a first embodiment of the present invention, having two pairs of secondary outlets;
- Figure 2 is an exploded view of a coplanar manifold according to a second embodiment of the present invention, having four pairs of secondary outlets.

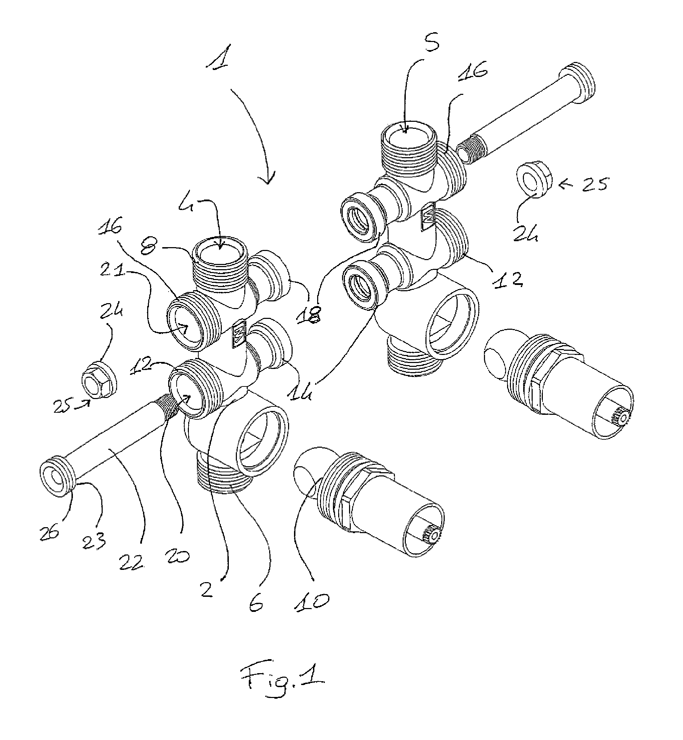

Referring to Figure 1, numeral 1 generally designates a coplanar manifold, which comprises a first manifold element 2, defining a first primary duct 4, and a second manifold element 3, defining a second primary duct 5.

As is shown in this figure, manifold elements 2, 3 are substantially symmetrical about the median plane of manifold 1, reference will therefore be made herein, when possible, to first manifold element 2 only, the characteristics thereof being intended to extend to second manifold element 3 as well.

The primary duct 4 has one inlet 6 and one outlet 8 and generally also has a flow-control valve 10.

The primary duct 4 has at least one first pair of secondary outlets 12, 14, defining a first secondary duct 20, and a second pair of secondary outlets 16, 18, defining a second secondary duct 22, which extend therefrom.

Referring to Figure 1, the secondary outlets designated by numerals 14 and 18 are the inner outlets, i.e. those which will be coupled to the corresponding inner outlets of the other manifold element 3; on the other hand, the secondary outlets designated by numerals 12 and 16 are the outer outlets, i.e. those designed to be coupled with the hydraulic circuit outside the manifold 1.

The manifold elements 2, 3 are interconnected by fastening means which, besides providing connection of the two manifold elements 2, 3, also provide fluid connection between primary ducts 4, 5 and secondary ducts 20, 21, so that first secondary duct 20 is in fluid connection with second primary duct 5 only and second secondary duct 21 is in fluid connection with first primary duct 4 only or vice versa. Clearly, each secondary duct 20, 21 is connected to one primary duct 4, 5 only, whereas each primary duct 4, 5 may be connected to multiple secondary ducts 20, 21.

According to the invention, each of the fastening means comprises a tubular member 22, having one flange 23, 24 at each end thereof. When manifold 1 is assembled, flange 23 abuts against a corresponding abutment surface (not shown) formed inside outer outlet 14 of secondary duct 20, whereas flange 24 abuts against a corresponding abutment surface (not shown) formed inside the inner outlet of manifold element 3 of secondary duct 20.

Advantageously, one tubular member 22 is provided for each secondary duct 20, 21, so that secondary ducts 20, 21 are in fluid isolation from each other.

In other words, manifold elements 2, 3 of the embodiment of Figure 1 have an abutment surface for flange 24, which is formed on one of the inner outlets 18 only, and an abutment surface for flange 23, formed on one of the outer outlets 12 only.

Thus, since the fastening means for the two manifold elements 2, 3 also act as inner flow distribution elements, the resulting structure is particularly compact and allows the coplanar manifold 1 to be formed with a modular construction, using a smaller number of parts, and consequently achieving an overall cost reduction.

Advantageously, tubular member 22 is situated within each secondary duct 20, 21; tubular member 22 further has such a size, relative to manifold elements 2, 3, as to be wholly contained in manifold 1, without projecting from the envelope shape defined by the two manifold elements 2, 3.

Advantageously, flange 23 at one of the ends of tubular member 22 is integrally formed therewith, so to further reduce the required number of parts, whereas the other flange 24 is advantageously formed on a hollow element 25 which is coupled to the end of tubular member 22, for instance by threading.

This arrangement allows to adjust the distance between the abutment surfaces of flanges 23, 24 and hence the force with which manifold elements 2, 3 are fastened together.

The flange 23 integral with tubular member 22 may include a seat 26 for an annular sealing gasket (not shown). In addition to or instead of the above, an annular sealing gasket 27 may be fitted onto flange 23.

The outer outlets 12, 16 preferably have such a size, relative to the size of flanges 23, 24 of tubular member 22, as to allow it to be assembled therein by introducing tools in manifold elements 2, 3 to tighten together the fastening members.

The present invention may further be defined in that each manifold element 2, 3 only has external threads on outer outlets 12, 16 of each pair of secondary outlets.

Since inner outlets 14, 18 have no threads thereon, but may at the most have a seat for a sealing element, considerable time savings are achieved for mechanical processing of each manifold element 2, 3.

Advantageously, the fastening members are in alternate arrangement, so that the abutment surfaces of the outer and inner surfaces on which they operate are alternately on either one of the manifold elements.

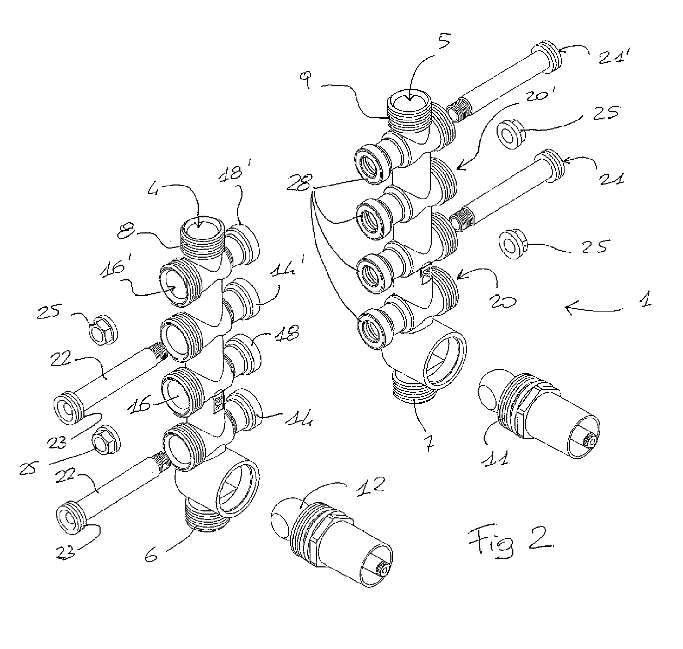

The manifold elements 2, 3 may have a two- or more way, e.g. a three- or preferably four-way construction. For example, Figure 2 shows a four-way construction incorporating the teachings of the present invention.

In this case, as shown, the structure of the present invention is duplicated: only two 18, 18' of the four inner outlets 14, 18, 14', 18' receive the abutting flange 24, and only two of the four outer outlets 12, 16, 12', 16' receive the abutting flange 23.

The manifold 1 is generally made of brass, preferably the brass alloy UNI-EN 12165 CW617N which, according to International Standards, is suitable for drinking water.

Those skilled in the art will obviously appreciate that a number of changes and variants may be made to the arrangements as described hereinbefore to meet incidental and specific needs, without departure from the scope of the invention, as defined in the following claims.

## Claims

1. A coplanar manifold (1) for a hydraulic circuit, comprising:
- a first manifold element (2) with a first primary inlet (6) and a first primary outlet (8), which define a first primary duct (4);
- a second manifold element (3) comprising a second primary inlet (7) and a second primary outlet (9), which define a second primary duct (5);
- fastening means for joining said first and second manifold elements (2, 3) together;
**characterized in that**
said fastening means further provide fluid connection between said second primary duct (5) and said first secondary duct (20) and between said first primary duct (4) and said second secondary duct (21) so that said first secondary duct (20) is in fluid connection with said second primary duct (5) only and said second secondary duct (21) is in fluid connection with said first primary duct (4) only.

2. A manifold (1) as claimed in the preceding claim, wherein said fastening means have, for each secondary duct (20, 21), one tubular member (22) with a flange (23, 24) at each end.

3. A manifold (1) as claimed in the preceding claim, wherein the flange (23) at one of said ends of said tubular member (22) is integral with said tubular member (22).

4. A manifold (1) as claimed in any one of the preceding claims, wherein the flange (24) at one of said ends of said tubular member (22) is formed as a hollow element (25) which is threaded onto said end of said tubular member (22).

5. A manifold (1) as claimed in any one of the preceding claims, wherein each of said tubular members (22) is located within its respective secondary duct (20, 21).

6. A manifold (1) as claimed in any one of the preceding claims, wherein one of the flanges (23) of said tubular member includes include a seat (26) for an annular sealing gasket.

7. A manifold (1) as claimed in any one of the preceding claims, wherein an annular sealing gasket (28) is interposed between opposed flanges (23) of said manifold elements (2, 3).

8. A manifold (1) as claimed in any one of the preceding claims, wherein the distance between the abutment surfaces of the flanges (23, 24) of said tubular member (22) is adjustable within such a range as to ensure tightness of said manifold elements (2, 3).

9. A manifold (1) as claimed in any one of the preceding claims wherein:
- each manifold element (2, 3) comprises an inner outlet (14, 18, 14', 18') and an outer outlet (12, 16, 12', 16') for each secondary duct (20, 21, 20', 21');
- inner outlets associated with the same secondary duct but formed on different manifold elements are aligned and in contact with each other;
- for each secondary duct, a fastening member operates on an abutment surface formed in an inner outlet and an abutment surface formed in an outer outlet, by driving them towards each other.

10. A manifold element (2) comprising a primary duct (4) and at least two secondary ducts (20, 21)
**characterized in that**
it has an inner outlet (14, 18) and an outer outlet (12, 16) for each secondary duct (20, 21) and that
threads are only provided on said outer outlets (12, 16).

11. A manifold element (2) as claimed in the preceding claim, wherein said threads are external threads.

12. A manifold element (2) as claimed in any one of claims 10 or 11, wherein said unthreaded inner outlets (14, 18) have an enlarged external diameter and an internal seat for a sealing gasket.
